# EUROPÄISCHE PATENTSCHRIFT

(11) **EP 0 622 612 B1**
(45) Veröffentlichungstag und Bekanntmachung des Hinweises auf die Patenterteilung: **03.07.1996**
(21) Anmeldenummer: 94105586.5
(22) Anmeldetag: 12.04.1994
(51) Int. Cl.: G01D 5/24

(54) **Kapazitive Messeinrichtung**
Capacitive measuring device
Dispositif de mésure capacitif

(30) Priorität: 23.04.1993 DE 4313344
(43) Veröffentlichungstag der Anmeldung: 02.11.1994
(73) Patentinhaber: Tesa Brown & Sharpe S.A., 1020 Renens (CH)
(72) Erfinder: Strack, Peter, F-54300 Chanteheux (FR); Kaiser, Andreas, Dr., F-59650 Villeneuve-D'Ascq (FR)
(74) Vertreter: BOVARD AG - Patentanwälte

(56) Entgegenhaltungen:
- EP-A- 0 053 091

## Beschreibung

Die Erfindung betrifft eine kapazitive Meßeinrichtung, insbesondere Längenmeßeinrichtung, mit einem Skalenteil und einer diesem gegenüber beweglichen Abtasteinheit, die Sendeelektroden und wenigstens eine Empfangselektrode trägt, wobei eine Sendeschaltung Sendesignale mit einer Grundfrequenz an die Sendeelektroden legt und die Empfangselektrode an eine Empfangsschaltung angeschlossen ist, der eine Auswerteschaltung für die Empfangssignale nachgeschaltet ist.

Solche kapazitiven Meßeinrichtungen werden beispielsweise bei Schublehren verwendet. Der Skalenteil ist von Kondensatorbelägen gebildet, die die kapazitive Kopplung zwischen den Sendeelektroden und der Empfangselektrode bzw. den Empfangselektroden vermittelt, welche ebenfalls von Kondensatorbelägen gebildet sind. Bei einer Relativbewegung der Abtasteinheit gegenüber dem Skalenteil ändert sich die kapazitive Kopplung zwischen den Sendeelektroden und den Empfangselektroden. Dies wird zur Anzeige der Verschiebepositionen ausgewertet. Eine derartige Meßeinrichtung ist in der EP 0 184 584 B1 beschrieben. Dort werden drei Sendeelektroden mit drei um jeweils 120° phasenverschobenen, insbesonders sinusförmigen Wechselspannungen gespeist. Diese können in einer Sendeschaltung aus Rechtecksignalen erzeugt werden. Es ist jedoch auch eine Speisung mit digitalen Signalen möglich, die nur Oberwellen höherer Ordnung enthalten, welche sich ausfiltern lassen.

Bei der EP 0 184 584 B1 wird die beim Verschieben der Abtasteinheit gegenüber dem Skalenteil auftretende Phasenverschiebung zwischen dem Sendesignal und dem Empfangssignal zur Erfassung der örtlichen Verschiebung ausgewertet. Da auch die elektronischen Bauteile der Meßeinrichtung selbst zu Phasenverschiebungen führen können, ist mit Meßfehlern zu rechnen, die schwer beherrschbar sind. Außerdem ist es aufwendig, mehrere sinusförmige Signale mit gleicher Amplitude und genauer Phasenverschiebung erzeugen. Bei Rechtecksignalen führen die Oberwellen hoher Amplitude zu vergleichsweise großen Interpolationensfehlern.

Darüber hinaus ist die bekannte Schaltung anfällig für externe Störsignale. Die Empfangssignale müssen deshalb gegen mögliche Störsignale, beispielsweise auch Signale aus einer LCD-Anzeige, abgeschirmt werden. Dies erhöht den Bauaufwand und damit die Herstellungskosten erheblich.

In der DE-PS 28 53 142 ist eine andere kapazitive Meßvorrichtung zur Bestimmung der relativen Lage zweier gegeneinander verschieblicher Teile beschrieben. Dort werden sendeseitige Sinusspannungen von einem Oszillator erzeugt. Diese werden an die Sendeelektroden angelegt. Die bei einer Verschiebung der Abtasteinheit gegenüber dem Skalenteil auftretende Phasenverschiebung des Meßsignales wird zur Messung ausgewertet. Die Richtung der Verschiebung wird über einen Zähler erfaßt, dessen Zählerstand sich in Abhängigkeit von der Verschiebung erhöht oder erniedrigt. Es treten hier ebenfalls die zur EP 0 184 584 B1 genannten Schwierigkeiten auf.

In der EP-A-0 053 091 ist eine weitere kapazitive Messvorrichtung dieser Art beschrieben. Sie benutzt einen Teil mit zwei Elektrodengruppen, getrennt durch eine dritte Elektrode. Die zwei Elektrodengruppen sind an eine erste Wechselspannung, respektive an eine zweite Wechselspannung angeschlossen. Die dritte Elektrode wird von einer dritten Wechselspannung Vx gespiesen, deren Wert in der Weise variiert wird, dass eine Empfangselektrode auf dem anderen Teil, beweglich relativ zum ersten Teil, ein Nullsignal empfängt. Die Wechselspannung gibt dann ein Mass der relativen Lage der beiden Teile. Diese Vorrichtung ist kompliziert und schwierig in der Praxis umzusetzen, weil beide, die Skalenteilelektroden und die Abtasteinheitselektroden, an die elektronische Schaltung angeschlossen werden müssen.

Auch in der DE-AS 22 18 824 ist ein Verfahren zum Messen der Verschiebung einer Elektrode eines Differentialkondensators relativ zu anderen Elektroden angegeben.

Aufgabe der Erfindung ist es, eine kapazitive Meßeinrichtung der eingangs genannten Art anzugeben, bei der systembedingte Meßfehler reduziert sind, um die Meßgenauigkeit auf einfache Weise zu verbessern.

Erfindungsgemäß ist obige Aufgabe bei einer kapazitiven Meßeinrichtung der eingangs genannten Art dadurch gelöst, daß die Sendesignale über einen Impulslängenmodulator und einen Synchronmodulator an den Sendeelektroden liegen und das Empfangssignal über einen Demodulator geleitet ist, daß der Synchronmodulator und der Demodulator mit der gleichen Modulationsfrequenz arbeiten, die größer als die Grundfrequenz ist, und daß beim Stillstehen der Abtasteinheit gegenüber dem Skalenteil die Grundfrequenz des Empfangssignales gleich der Grundfrequenz der Sendesignale ist und sich beim Bewegen der Abtasteinheit gegenüber dem Skalenteil die Grundfrequenz der Empfangssignale entsprechend der Bewegungsgeschwindigkeit gegenüber der Grundfrequenz der Sendesignale ändert und diese Frequenzänderung von der Auswerteschaltung zur Anzeige der Bewegungsstrecke ausgewertet wird.

Durch die Synchronmodulation bzw. Demodulation ist erreicht, daß zwischen den Sendeelektroden und der Empfangselektrode etwa auftretende Störungen sich kaum auf das Empfangssignal und damit auf das Meßergebnis auswirken, weil sich im Vergleich zur Modulationsfrequenz niederfrequente Störsignale hinsichtlich ihrer Amplitude infolge Polaritätsumkehr ausmitteln.

Es liegt bei der Erfindung eine echte Synchronmodulation bzw. Synchrondemodulation vor, weil der Modulator und der Demodulator an exakt der gleichen Frequenz liegen. Dies steht im Gegensatz zu einer "Synchronmodulation" beim Rundfunkempfang, wo der Sender und der Empfänger räumlich voneinander getrennt sind.

Bei der Erfindung wird zur Messung nicht die Phasenlage des Empfangssignales gegenüber dem Sendesignal ausgewertet, sondern es werden die von der Relativbewegung zwischen dem Skalenteil und den Sende- bzw. Empfangselektroden abhängige Frequenzänderungen des Empfangssignales gegenüber dem Sendesignal ausgewertet. Diese Frequenzänderung läßt sich als Dopplereffekt betrachten. Bei einer Bewegung in der einen Richtung erhöht sich die Empfangs frequenz gegenüber der Sendefrequenz; bei einer Bewegung in der anderen Richtung erniedrigt sich die Empfangsfrequenz gegenüber der Sendefrequenz.

Dadurch, daß nicht die Phasenlage, sondern die Frequenzänderung zur Messung ausgewertet wird, beeinträchtigen Eigenschaften der Bauteile der Meßeinrichtung, die die Phasenlage beeinflussen, das Meßergebnis nicht.

Insgesamt wird also die Meßgenauigkeit verbessert, weil die Störungsempfindlichkeit reduziert wird.

Bei der beschriebenen Einrichtung kommt es nur auf die Relativbewegung zwischen dem Skalenteil und der Abtasteinheit an. Es kann entweder das Skalenteil oder die Abtasteinheit stillstehen. Die Relativbewegung kann eine geradlinige oder eine kreisförmige Bewegung sein.

Vorteilhafte Ausgestaltungen der Erfindung ergeben sich aus den abhängigen Ansprüchen und der folgenden Beschreibung eines Ausführungsbeispieles. In der Zeichnung zeigen:
- Figur 1: ein Blockschaltbild der kapazitiven Meßeinrichtung schematisch,
- Figur 2: ein Diagramm eines impulslängenmodulierten Signales mit kleiner dritter, harmonischer Oberwelle, vor der Synchronmodulation,
- Figur 3: ein impulslängen- und synchronmoduliertes Sendesignal,
- Figur 4: ein Empfangssignal am Eingang des Verstärkers und
- Figur 5: ein Teil-Empfangssignal bei n Abtastungen des LSB-Komparators.

Die Meßeinrichtung weist ein sich über die Meßstrecke erstreckendes Skalenteil 1 auf. Das Skalenteil 1 trägt Kondensatorbeläge 2. Eine Abtasteinheit 3 weist einen Träger 4 auf, auf dem Sendeelektroden 5, im Beispielsfalle acht Sendeelektroden, und wenigstens eine Empfangselektrode 6, im Beispielsfalle zwei Empfangselektroden, angeordnet sind. Eine solche Anordnung ist in der EP 0 184 584 B1 näher beschrieben. Der Träger 4 mit der Abtasteinheit 3 ist gegenüber dem Skalenteil 1 im Meßbereich des Doppelpfeiles M verschieblich.

An den Sendeelektroden 5 liegen Ausgänge S0 bis S7 eines Synchronmodulators 7, an den über vier (acht) Leitungen 8 ein Signalgenerator 9 angeschlossen ist, welcher von einem ROM-Speicher 10 gesteuert ist. Der Signalgenerator 9 und der Speicher 10 liegen über Taktleitungen 11' an einer Steuerlogik 11, die über eine Leitung 12 eine Modulationsfrequenz an den Synchronmodulator 7 legt.

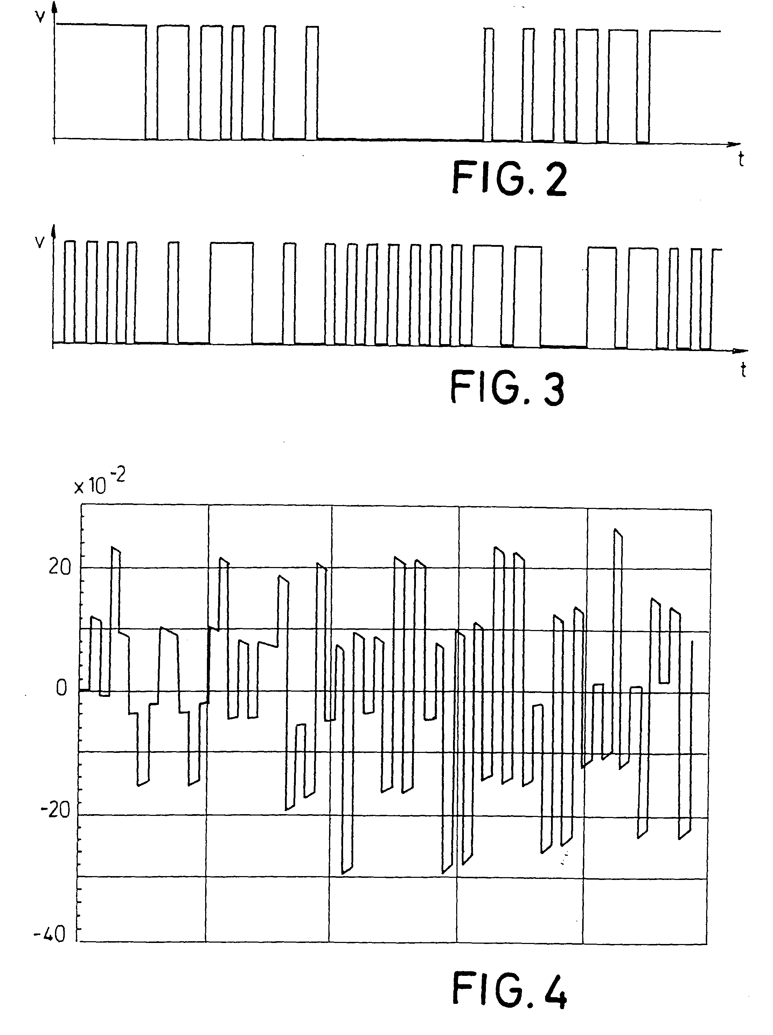

Der Signalgenerator 9 erzeugt an seinen Leitungen 8 rechteckförmige impulslängenmodulierten Signale konstanter Amplitude (vgl. Figur 2), wobei die Impulslängenmodulation grob angenähert einer Sinusfunktion entspricht. Die Grundfrequenz der Funktion liegt im Beispielsfalle bei 300 Hz. Die jeweiligen Impulslängen sind im Speicher 10 abgelegt und werden aus diesem ausgelesen. Die Verhältnisse der Impulslängen sind im Speicher 10 so festgelegt, daß nach einer Tiefpaßfilterung (vgl. Tiefpaßfilter 16) ein Signal entsteht, bei dem die dritte harmonische Oberwelle der Grundfrequenz möglichst klein ist (vgl. Figur 2). Die höheren harmonischen Oberwellen können vernachlässigt werden, da sie durch ein Tiefpaßfilter 4. Ordnung eliminiert werden.

Die impulslängenmodulierten Signale (vgl. Figur 2) der Leitungen 8 sind gleich, jedoch um jeweils 45° phasenverschoben. Diese Phasenverschiebung wird durch entsprechendes Verschieben der Adressen des Speichers 10 erreicht. Bei acht Sendesignalen werden die ersten vier Signale auf diese Weise erzeugt; die anderen vier Signale sind eine Inversion der ersten vier Signale.

Die Modulationsfrequenz ist um ein Vielfaches, beispielsweise um den Faktor 64, höher als die Grundfrequenz. Bei einer Grundfrequenz von 300 Hz beträgt die Modulationsfrequenz dann 19 200 Hz. In Figur 3 ist eines der impulslängenmodulierten Signale nach der Synchronmodulation gezeigt. Dieses Signal liegt an einer der Sendeelektroden S0 bis S7 an. An den anderen Sendeelektroden liegen ebensolche Signale, jedoch phasenverschoben an. Durch die Synchronmodulation der impulslängenmodulierten Rechtecksignale werden Störungen, die zwischen den Sendeelektroden 5 und den Empfangselektroden 6 einstrahlen können, in ihrer Auswirkung reduziert. Der Synchronmodulator 7 kann zur gewünschten Synchronmodulation mit Exklusiv-ODER-Gattern arbeiten.

Die Empfangselektrode 6 liegt an einem Verstärker 13. Ist auch eine zweite Empfangselektrode vorgesehen, dann liegt diese an einem zweiten Eingang des Verstärkers 13, wobei das erste Empfangssignal E1 und das zweite Empfangssignal E2 der Inversion oder der Umkehrung des ersten Empfangssignales E1 entspricht.

Die Empfangssignale E1, E2 werden dann in einem dem Verstärker 13 nachgeschalteten Synchrondemodulator 14 demoduliert. Eines der Empfangssignale El am Eingang des Verstärkers 13 ist in Figur 4 gezeigt. Aus Figur 3 ist ersichtlich, daß durch diese Modulation der Reihe nach mindestens drei verschiedene Frequenzen an den Sendeelektroden anliegen. Der Demodulator 14 liegt über eine Leitung 15 an der gleichen Modulationsfrequenz wie der Synchronmodulator 7. Der Synchronmodulator 7 im Zusammenwirken mit dem Demodulator 14 eliminiert auf die Empfangselektroden 6 wirkende Störsignale, deren Frequenz im Regelfall wesentlich niedriger ist als die Modulationsfrequenz (beispielsweise Störsignale aus einem LCD-Display der Meßeinrichtung), weil die Amplituden der Störsignale in den wechselnden Polaritäten der Modulationsfrequenz am Demodulator 14 anliegen und sich deshalb ausmitteln. Höherfrequente Störungen werden durch das Tiefpaßfilter (16) eliminiert.

Dem Demodulator 14 ist ein Tiefpaßfilter 16 nachgeschaltet. An diesem liegt im Ergebnis die Summe von allen Signalen der Sendeelektroden 5 an. Das Tiefpaßfilter 16 ist beispielsweise ein lineares Tiefpaßfilter 4. Ordnung. An seinem Ausgang 17 entsteht ein sehr sauberes analoges Sinussignal mit der Grundfrequenz von 300 Hz, das dem impulslängenmoduliert gesendeten Signal der Leitungen 8 bzw. dem impulslängen- und frequenzmodulierten Sendesignal der Sendeelektrode 5 entspricht.

Im Ausgang 17 liegt ein Komparator 18, der das analoge Sinussignal in ein entsprechendes Rechtecksignal gleicher Frequenz umsetzt. Die genannte Gleichheit der Grundfrequenz (300 Hz) des Sinussignales am Ausgang 17 mit der Grundfrequenz des Signalgenerators 9 liegt vor, wenn der Träger 4 gegenüber der Abtasteinheit 3 stillsteht. Für den Meßvorgang gilt das unten Beschriebene.

Der Komparator 18 ist ausgangsseitig an eine Steuerlogik 19 gelegt, welche an einen Zähler 20 angeschlossen ist. Am Zähler 20 liegt eine Taktleitung 21, die den Zähler 20 mit einer Frequenz taktet, die wesentlich höher als die Grundfrequenz ist. Die Taktfrequenz beträgt beispielsweise das 512-fache (2⁹) der Grundfrequenz. Diese Taktfrequenz ist etwa so groß oder gleich groß wie die Taktfrequenz, die an den Taktleitungen (11') des Speichers 10 und des Signalgenerators 9 anliegt. Die Taktleitung 21 liegt auch an dem Komparator 18.

Bei jeder positiven oder jeder negativen Flanke des Ausgangssignales des Komparators 18 wird der Zähler 20 auf einen negativen Wert gesetzt. Die Größe dieses Wertes hängt von dem gewünschten Interpolationsfaktor ab. Im Beispielsfall wird der Zähler bei jeder positiven Flanke auf "-512" gesetzt, was einem Interpolationsfaktor bzw. einer Auflösung von 10 Bit entspricht. Wenn eine größere oder kleinere Auflösung gewünscht ist, wird ein entsprechend anderer Wert bzw. eine entsprechend andere Taktfrequenz vorgegeben. Liegt im Beispielsfalle ein 300 Hz-Signal am Komparator 18 an, dann zählt der Zähler 20 während dieses Signales um 512 Schritte auf 0 zurück, was zur Anzeige ausgewertet wird. Dies ist der Fall, wenn keine Verschiebung des Trägers 4 gegenüber dem Skalenteil 1 erfolgte. Es entspricht also die Auflösung des Komparators 18 dem Interpolationsfaktor, wobei der Komparator 18 mit der Taktfrequenz des Zählers 20 synchronisiert ist.

Wird bei einem Meßvorgang der Träger 4 gegenüber dem Skalenteil 1 verschoben, dann ändert sich die Frequenz des am Komparator 18 anliegenden Sinussignales gegenüber der Grundfrequenz (300 Hz) entsprechend der Verschiebungsgeschwindigkeit pro Zeiteinheit. Die Grundfrequenz von 300 Hz genügt, um bei Verschiebegeschwindigkeiten in der Größenordnung von etwa bis 1,5 m/s eine hinreichende Auflösung zu erreichen.

Wird der bewegliche Teil, im Beispielsfall der Träger 4, gegenüber dem - feststehenden - Skalenteil 1 in der einen Richtung verschoben, dann erhöht sich die Frequenz am Komparator 18. Wird er in der anderen Richtung verschoben, erniedrigt sich die Frequenz am Komparator 18 entsprechend. Ergibt sich am Komparator 18 eine Empfangsfrequenz, die höher ist als die Grundfrequenz am Signalgenerator 9, dann erreicht der Zähler 20 einen von Null abweichenden negativen Wert. Ist die Empfangsfrequenz am Generator 18 niedriger als die Grundfrequenz am Signalgenerator 9, dann erreicht der Zähler 20 einen von Null abweichenden positiven Wert, wobei sich aus der Abweichung des Zählers von Null der Verschiebeweg des Trägers 4 gegenüber dem Skalenteil 1 ergibt, was zur Anzeige ausgewertet wird.

Der jeweils in einer Periode im Zähler 20 erreichte Zählerstand wird an einen übergeordneten Zähler 22 übertragen und in diesem zu vorherigen Werten addiert (bzw. subtrahiert). Der Zählerstand des übergeordneten Zählers 22 kann dann an einer Anzeigeeinrichtung 23, beispielsweise LCD-Anzeigeeinrichtung, dargestellt werden.

Günstig ist bei der Erfindung auch, daß die Offset-Spannung des Komparators 18 sich nicht auf das Meßergebnis auswirkt, weil zur Messung die momentane Frequenzänderung des demodulierten und gefilterten Empfangssignales ausgewertet wird, und daß sich bauteilbedingte Phasenverschiebungen kaum auf das Meßergebnis auswirken. Außerdem ist vorteilhaft, daß sich aus der positiven oder negativen Frequenzänderung die Richtung der Verschiebung des beweglichen Teiles gegenüber dem feststehenden Teil der Meßeinrichtung von selbst ergibt. Vorteilhaft ist auch, daß die kapazitive Strecke zwischen den Sendeelektroden 5 und den Empfangselektroden 6 wegen der Frequenzmodulation nicht durch niederfrequente Signale, beispielsweise der LCD-Anzeigeeinrichtung, des Netzes, oder Fluoreszenzlampen o. ä. gestört wird. Außerdem ist auch der Stromverbrauch der Meßeinrichtung kleiner als beim Stand der Technik, was insbesondere bei batteriebetriebenen Meßgeräten wesentlich ist.

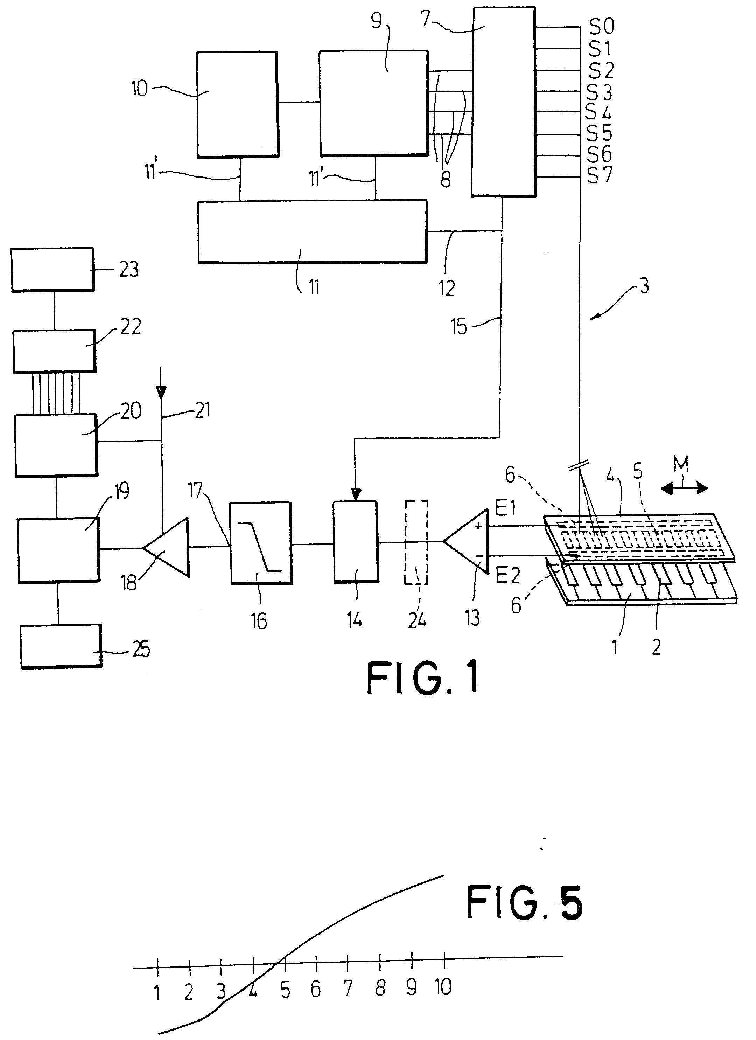

Die Unempfindlichkeit der Meßeinrichtung gegen Störungen läßt sich dadurch weiter erhöhen, daß zwischen dem Verstärker 13 und dem Demodulator 14 ein Bandpaßfilter 24 geschaltet wird, das in Figur 1 gestrichelt dargestellt ist. Die Bandbreite des Bandpaßfilters 24 liegt etwa beim vierfachen der Grundfrequenz, also bei 1,2 kHz. Das Bandpaßfilter 24 ist auf eine Mittenfrequenz gleich der Modulationsfrequenz, also etwa 20 kHz bzw. 19,2 kHz ausgelegt. Durch das Bandpaßfilter 24 werden alle auf die Empfangselektroden 6 wirkenden Störfrequenzen, die außerhalb der Bandbreite des Bandpaßfilters 24 liegen, unterdrückt.

Eine höhere Auflösung der beim Meßvorgang auftretenden Verschiebungen läßt sich durch eine höhere Auflösung des vom Komparator 18 erfaßten Empfangssignales bzw. dessen Änderungen gegenüber der Grundfrequenz erreichen. Hierfür kann die Taktfrequenz des Zählers 20 und des Komparators 18 erhöht werden. Ein Komparator 18 mit einer höheren Auflösung von beispielsweise 14 Bit und ein entsprechend schnellerer Zähler hätten jedoch einen höheren Stromverbrauch zur Folge, was bei batteriebetriebenen Geräten unerwünscht ist.

Um eine höhere Auflösung bei nicht größerem Stromverbrauch zu erreichen, kann vorgesehen sein, daß mehrere, n, Messungen mit dem auf 10 Bit auflösenden Komparator durchgeführt werden und die Meßresultate der n Messungen summiert werden. Bei einer schnellen Bewegung mißt die Einrichtung mit der beschriebenen Auflösung. Für die höhere Auflösung wird vorausgesetzt, daß die Empfangsfrequenzen nach dem Tiefpaßfilter nur wenig von der Grundfrequenz abweichen, d. h. daß sich der bewegliche Teil nur langsam bewegt oder sogar still steht. Das Empfangssignal wird dann n mal abgetastet und bei jeder der n Messungen wird das Fenster des Komparators um 1/n verschoben. Bei n=10 kann die Auflösung um den Faktor 10 erhöht werden. Durch die Verschiebung des Fensters wird der Nulldurchgang genauer erfaßt, wodurch die Auflösung erhöht wird. Im in Figur 5 gezeigten Beispiel zählt der Zähler 20 viermal auf 511 und sechsmal auf 512, was für die höchstauflösende Dezimale bei n=10 den Wert 4 ergibt.

Der Vorteil besteht darin, daß mit einem 10 Bit Komparator eine gleiche hohe Auflösung erreicht wird, wie mit einem 14 Bit auflösenden Komparator und daß der Stromverbrauch sowohl des Komparators 18 als auch des Zählers 20 kleiner ist. Die maximale Verschiebegeschwindigkeit wird dadurch nicht reduziert und der Aufbau der Signalerzeugung und der Filterung bleibt unverändert.

Bei den über die Sendeelektroden S0 bis S7 verwendeten acht Sendesignalen ist mit einem Linearitätsfehler von 1,1 % der Länge einer rechteckigen Sendeelektrode zu rechnen. Bei einem Interpolationsfaktor von 512 kann dieser Linearitätsfehler vernachlässigt werden. Bei höheren Interpolationsfaktoren kann dieser systematische und wiederholbare Interpolationsfehler durch eine Kompensation korrigiert werden. Diese Kompensation setzt voraus, daß die relative Lage der Empfangselektroden gegenüber den Sendeelektroden bekannt ist. Diese Lage wird durch eine Messung der Phasenverschiebung zwischen Sende- und Empfangssignal auf etwa 2° genau bestimmt. Aufgrund dieser Lageinformationen kann ein Korrekturwert aus einem weiteren ROM-Speicher 25 gelesen und zum Meßwert des Zählers 20 addiert werden.

Lineare Tiefpaßfilter 4. Ordnung mit niedrigem Stromverbrauch weisen eine relativ große Eigenphasenverschiebung auf. Diese Eigenphasenverschiebung läßt sich durch entsprechende Adressierung des ROM-Speichers 25 mit berücksichtigen. Dies kann dadurch geschehen, daß auf alle Sendeelektroden vor jeder Nullung des übergeordneten Zählers 22 ein gleichphasiges Signal gelegt und die Phasenverschiebung zwischen den Sende- und Empfangssignalen gemessen wird. Das Resultat entspricht der Phasenverschiebung der analogen Komponenten der Einrichtung und wird bei der Berechnung der Adressen des ROM-Speichers 25 berücksichtigt. Der Vorteil dabei besteht darin, daß eine bessere Linearität erreicht werden kann, ohne die Anzahl der Sendeelektroden zu vervielfachen.

## Patentansprüche

1. Kapazitive Meßeinrichtung, insbesondere Längenmeßeinrichtung, mit einem Skalenteil (1) und einer diesem gegenüber beweglichen Abtasteinheit (4), die Sendeelektroden (5) und wenigstens eine Empfangselektrode (6) trägt, wobei eine Sendeschaltung (7,9,10,11) Sendesignale (3) mit einer Grundfrequenz an die Sendeelektroden legt und die Empfangselektrode an eine Empfangsschaltung (13,14) angeschlossen ist, der eine Auswerteschaltung (16,18,19,20) für die Empfangssignale nachgeschaltet ist,
dadurch gekennzeichnet,
daß die Sendesignale über einen Impulslängenmodulator und einen Synchronmodulator (7) an den Sendeelektroden (S0 bis S7) liegen und das Empfangssignal (E1, E2) über einen Demodulator (14) geleitet ist, daß der Synchronmodulator (7) und der Demodulator (14) mit der gleichen Modulationsfrequenz arbeiten, die größer als die Grundfrequenz ist, und daß beim Stillstehen der Abtasteinheit (3) gegenüber dem Skalenteil (1) die Grundfrequenz des Empfangssignales gleich der Grundfrequenz des Sendesignales ist und sich beim Bewegen der Abtasteinheit (3) gegenüber dem Skalenteil (1) die Grundfrequenz des Empfangssignales entsprechend der Bewegungsgeschwindigkeit gegenüber der Grundfrequenz der Sendesignale ändert und diese Frequenzänderung von der Auswerteschaltung (16,18, 19, 20) zur Anzeige der Bewegungsstrecke ausgewertet wird.

2. Meßeinrichtung nach Anspruch 1,
dadurch gekennzeichnet,
daß die dem Synchronmodulator (7) zugeführten Sendesignale der Grundfrequenz impulslängenmodulierte Rechtecksignale mit angenäherter Sinusfunktion sind, bei der die dritte harmonische Oberwelle niedrig gehalten wird.

3. Meßeinrichtung nach Anspruch 2,
dadurch gekennzeichnet,
daß ein Signalgenerator (9) zur Erzeugung der impulslängenmodulierten Rechtecksignale von einem ROM-Speicher (10) gesteuert ist.

4. Meßeinrichtung nach einem der vorhergehenden Ansprüche,
dadurch gekennzeichnet,
daß an dem Demodulator (14) eingangsseitig ein Empfangssignal (E1) und ein invertiertes Empfangssignal (E2) liegt.

5. Meßeinrichtung nach einem der vorhergehenden Ansprüche,
dadurch gekennzeichnet,
daß zumindest sechs Sendesignale vorgesehen sind, die jeweils in der Grundfrequenz im gleichen Winkelabstand gegeneinander phasenverschoben sind.

6. Meßeinrichtung nach einem der vorhergehenden Ansprüche,
dadurch gekennzeichnet,
daß dem Demodulator (14) ein Tiefpaßfilter (16) nachgeschaltet ist, an dessen Ausgang ein sinusförmiges Empfangssignal entsteht, das beim Stillstand der Abtasteinheit (3) gegenüber dem Skalenteil (1) die Grundfrequenz des Sendesignales und beim Bewegen der Abtasteinheit (3) gegenüber dem Skalenteil (1) eine von dieser je nach der Bewegungsrichtung positiv oder negativ abweichende Frequenz hat.

7. Meßeinrichtung nach Anspruch 6,
dadurch gekennzeichnet,
daß dem Tiefpaßfilter (16) ein Komparator (18) nachgeschaltet ist, der aus dem sinusförmigen Empfangssignal ein Rechtecksignal formt und mit dem Zähler synchronisiert ist, um die gewünschte Auflösung zu erreichen.

8. Meßeinrichtung nach Anspruch 7,
dadurch gekennzeichnet,
daß dem Komparator (18) ein Zähler (20) nachgeschaltet ist, der bei jedem Nulldurchgang des Empfangssignales auf einen Wert gesetzt wird, von dem aus er entsprechend der jeweiligen Frequenz des Empfangssignales weiterzählt.

9. Meßeinrichtung nach Anspruch 8,
dadurch gekennzeichnet,
daß der Stand des Zählers (20) in jeder Periode der Grundwelle über einen weiteren Zähler (22) zur Anzeige des Meßergebnisses weiterverarbeitet wird.

10. Messeinrichtung nach einem der vorhergehenden Ansprüche,
dadurch gekennzeichnet,
dass dem Demodulator (14) ein Bandpassfilter (24) vorgeschaltet ist.

11. Meßeinrichtung nach einem der vorhergehenden Ansprüche,
dadurch gekennzeichnet,
daß ein dem Linearitätsfehler entsprechender Korrekturwert zum Meßwertzähler (20) addiert wird.

12. Meßeinrichtung nach einem der vorhergehenden Ansprüche,
dadurch gekennzeichnet,
daß das Empfangssignal n mal abgetastet und bei jeder der n Messungen das Fenster des Komparators (18) um 1/n verschoben wird, wodurch mehrere Messungen mit dem auf 10 Bit auflösenden Komparator (18) durchführbar und die Meßresultate der n Messungen summierbar sind.

## Claims

1. Capacitive measuring apparatus, in particular a length measuring apparatus, comprising a scale portion (1) and a scanning unit (4) which is movable relative to said scale portion, said scanning unit having transmitting electrodes (5) and at least one receiving electrode (6); a transmitting circuit (7, 9, 10, 11) for applying transmitting signals (3) at a basic frequency to the transmitting electrodes, said at least one receiving electrode being connected to a receiving circuit (13, 14), an evaluating circuit (16, 18, 19, 20) connected to the receiving circuit for the receiving signals;
characterized in that
the transmitting signals are applied to the transmitting electrodes (S0 to S7) via a pulse duration modulator and a synchronous modulator (7) and the receiving signal (E1, E2) is led via a demodulator (14); in that the synchronous modulator (7) and the demodulator (14) operate at the same modulation frequency which is higher than the basic frequency, and in that when the scanning unit (3) is stationary relative to the scale portion (1) the basic frequency of the receiving signal is equal to the basic frequency of the transmitting signal and when the scanning unit (3) moves relative to the scale portion (1) the basic frequency of the receiving signal changes corresponding to the speed of movement relative to the basic frequency of the transmitting signals and this change in frequency is evaluated by the evaluating circuit (16, 18, 19, 20) so as to display the extent of the movement.

2. Measuring apparatus according to claim 1,
characterized in that
the transmitting signals which are supplied to the synchronous modulator (7) at the basic frequency are pulse duration-modulated rectangular signals having an approximate sine function, in which a third harmonic is maintained low.

3. Measuring apparatus according to claim 2,
characterized in that
a signal generator (9) for the generation of the pulse duration-modulated rectangular signals is controlled by an ROM-memory (10).

4. Measuring apparatus according to one of the preceding claims,
characterized in that
a receiving signal (E1) and an inverted receiving signal (E2) is applied to an input of the demodulator (14).

5. Measuring apparatus according to one of the preceding claims,
characterized in that
there are generated at least six transmitting signals which are respectively phase-shifted relative to each other in the basic frequency at the same angular spacing.

6. Measuring apparatus according to one of the preceding claims,
characterized in that
a low-pass filter (16) is connected to the demodulator (14), at whose output a sinusoidal receiving signal arises which, when the scanning unit (3) is stationary relative to the scale portion (1), is at the basic frequency of the transmitting signal, and when the scanning unit (3) moves relative to the scale portion (1) is at a frequency which differs from the basic frequency positively or negatively depending upon the respective direction of movement.

7. Measuring apparatus according to claim 6,
characterized in that
a comparator (18) is connnected to the low-pass filter (16), said comparator forming a rectangular signal from the sinusoidal receiving signal which is synchronized with a counter for achieving a desired resolution.

8. Measuring apparatus according to claim 7,
characterized in that a counter (20) is connected to the comparator (18), the counter at each passage through zero of the receiving signal being set to a value from which the counter continues to count corresponding to the respective frequency of the receiving signal.

9. Measuring apparatus according to claim 8,
characterized in that
the state of the counter (20) during each period of a basic wave is subjected to further processing through a further counter (22) for displaying the measurement result.

10. Measuring apparatus according to one of the preceding claims,
characterized in that
a band-pass filter (24) is selectively connected ahead of the demodulator (14).

11. Measuring apparatus according to one of the preceding claims,
characterized in that
a corrective value corresponding to a linearity error is added to the measurement value counter (20).

12. Measuring apparatus according to one of the preceding claims,
characterized in that
the receiving signal is sampled "n" times and within each of the "n" measurements the window of the comparator (18) is displaced by 1/n, whereby a plurality of measurements can be carried out with the comparator (18) affording a 10-bit resolution and the measurement results of the "n" measurements can be summed up.

## Revendications

1. Dispositif de mesure capacitif, en particulier dispositif de mesure de longueur, comprenant une règle (1) et une unité de capteur (4) mobile, opposée à la règle, et portant des électrodes d'émission (5) et au moins une électrode de réception (6), un circuit d'émission (7, 9, 10, 11) envoyant des signaux émis (3) avec une fréquence fondamentale aux électrodes d'émission, l'électrode de réception étant reliée à un circuit de réception (13, 14), lequel est placé avant un circuit d'évaluation (16, 18, 19, 20) pour les signaux reçus,
caractérisé en ce que
les signaux émis sont envoyés aux électrodes d'émission (S0 à S7) par l'intermédiaire d'un modulateur de longueur d'impulsion et d'un modulateur synchrone (7) et en ce que le signal reçu (E1, E2) est transmis par l'intermédiaire d'un démodulateur (14), le modulateur synchrone (7) et le démodulateur (14) travaillant avec la même fréquence de modulation qui est plus élevée que la fréquence fondamentale, et en ce que lorsque l'unité de capteur (3) est immobile face à l'échelle (1) la fréquence fondamentale du signal reçu est égale à la fréquence fondamentale du signal émis, tandis que lorsque l'unité de capteur (3) se déplace face à l'échelle (1) la fréquence fondamentale du signal reçu se modifie par rapport à la fréquence fondamentale du signal émis en fonction de la vitesse de déplacement, cette modification de fréquence étant évaluée par le circuit d'évaluation (16, 18, 19, 20) pour afficher le parcours de déplacement.

2. Dispositif de mesure selon la revendication 1, caractérisé en ce que les signaux émis transmis au modulateur synchrone (7) sont des signaux rectangulaires de fréquence fondamentale modulés en longueur d'impulsion avec une fonction approximativement sinusoïdale en maintenant bas le seuil supérieur d'harmoniques de troisième ordre.

3. Dispositif de mesure selon la revendication 2, caractérisé en ce qu'un générateur de signal (9) est commandé par une mémoire morte (10) pour générer des signaux rectangulaires modulées en longueur d'impulsion.

4. Dispositif de mesure selon l'une des revendications précédentes, caractérisé en ce qu'un signal reçu (E1) et un signal reçu inversé (E2) sont fournis à l'entrée du démodulateur (14).

5. Dispositif de mesure selon l'une des revendications précédentes, caractérisé en ce que au moins six signaux émis sont prévus qui sont chacun déphasé les uns par rapport aux autres d'un même angle.

6. Dispositif de mesure selon l'une des revendications précédentes, caractérisé en ce qu'un filtre passe-bas est branché après le démodulateur (14), à la sortie duquel un signal sinusoïdal est produit qui a la fréquence fondamentale du signal émis lorsque l'unité de capteur (3) est immobile face à l'échelle (1) et une fréquence augmentée ou diminuée selon le sens de déplacement lorsque l'unité de capteur (3) se déplace par rapport à l'échelle (1).

7. Dispositif de mesure selon la revendication 6, caractérisé en ce qu'un comparateur (18) est branché après le filtre passe-bas (16) qui génère à partir du signal reçu sinusoïdal un signal rectangulaire et qui est synchronisé avec le compteur pour obtenir la résolution désirée.

8. Dispositif de mesure selon la revendication 7, caractérisé en ce qu'un compteur (20) est branché après le comparateur (18) qui lors de chaque passage à zéro du signal reçu est remis à une valeur à partir de laquelle il continue de compter selon la fréquence respective du signal reçu.

9. Dispositif de mesure selon la revendication 8, caractérisé en ce que l'état du compteur (20) est utilisé par un autre compteur (22) dans chaque période de l'onde de base pour afficher le résultat de la mesure.

10. Dispositif de mesure selon l'une des revendications précédentes, caractérisé en ce qu'un filtre passe-bande (24) est branché avant le démodulateur (14).

11. Dispositif de mesure selon l'une des revendications précédentes, caractérisé en ce qu'une valeur de correction correspondant à l'erreur linéaire est additionnée au compteur de valeur de mesure (20).

12. Dispositif de mesure selon l'une des revendications précédentes, caractérisé en ce que le signal reçu est échantillonné n fois et en ce que lors de chacune de n mesures la fenêtre du comparateur (18) est décalée de 1/n, de manière à ce que plusieurs mesures puissent être effectuées avec le comparateur (18) d'une résolution de 10 bits et à ce que les résultats de mesure des n mesures puissent être additionnés.
